(19) **Europäisches Patentamt / European Patent Office / Office européen des brevets**

(11) **EP 4 212 481 A1**

(12) # EUROPEAN PATENT APPLICATION
published in accordance with Art. 153(4) EPC

(43) Date of publication:
**19.07.2023 Bulletin 2023/29**

(21) Application number: **21866280.7**

(22) Date of filing: **18.03.2021**

(51) International Patent Classification (IPC):
$C01F\ 7/00^{(2022.01)}$    $B01D\ 53/50^{(2006.01)}$
$B01D\ 53/56^{(2006.01)}$    $B01D\ 53/68^{(2006.01)}$
$B01D\ 53/75^{(2006.01)}$    $B01D\ 53/82^{(2006.01)}$
$B01D\ 53/86^{(2006.01)}$    $B01D\ 53/96^{(2006.01)}$
$B01J\ 20/08^{(2006.01)}$    $B01J\ 20/34^{(2006.01)}$
$B01J\ 23/34^{(2006.01)}$    $F23J\ 15/00^{(2006.01)}$

(52) Cooperative Patent Classification (CPC):
**B01D 53/50; B01D 53/56; B01D 53/68;
B01D 53/75; B01D 53/82; B01D 53/86;
B01D 53/96; B01J 20/08; B01J 20/34; B01J 23/34;
C01F 7/00; F23J 15/00;** Y02A 50/20

(86) International application number:
**PCT/JP2021/011044**

(87) International publication number:
**WO 2022/054318 (17.03.2022 Gazette 2022/11)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **08.09.2020 JP 2020150789**

(71) Applicants:
• **Kurita Water Industries Ltd.**
**Tokyo 164-0001 (JP)**
• **Tohoku University**
**Sendai-shi, Miyagi 980-8577 (JP)**

(72) Inventors:
• **ITOU, Ichirou**
**Tokyo 164-0001 (JP)**
• **HAN, Tianye**
**Tokyo 164-0001 (JP)**
• **YOSHIOKA, Toshiaki**
**Sendai-shi, Miyagi 980-8577 (JP)**
• **KAMEDA, Tomohito**
**Sendai-shi, Miyagi 980-8577 (JP)**

(74) Representative: **TBK**
**Bavariaring 4-6**
**80336 München (DE)**

(54) **METHOD FOR TREATING ACIDIC EXHAUST GAS, EQUIPMENT FOR TREATING ACIDIC EXHAUST GAS, AND INCINERATION FACILITY**

(57) There is provided a method for treating an acid exhaust gas generated from an incinerator, including the following first to third steps: the first step of bringing the acid exhaust gas generated from the incinerator into contact with an anionic layered double hydroxide to remove $SO_x$ in the acid exhaust gas; the second step of bringing the acid exhaust gas having undergone the first step into contact with a transition metal oxide to oxidize NO in the acid exhaust gas into $NO_2$; and the third step of removing $NO_x$ in the acid exhaust gas having undergone the second step.

Fig. 1

**Description**

Technical Field

The present invention relates to a method for treating an acid exhaust gas generated from an incinerator, an equipment for treating an acid exhaust gas, and an incineration facility.

Background Art

Combustion exhaust gases discharged from incinerators in combustion facilities contain acid gases being hazardous acid substances, such as hydrogen chloride, sulfur oxides ($SO_x$) such as sulfur dioxide, and nitrogen oxides ($NO_x$) such as nitrogen monoxide and nitrogen dioxide. Hence, prior to release of the combustion exhaust gases into the air, these acid gases need to be removed. Hereinafter, the combustion exhaust gas containing acid gases refers to an acid exhaust gas.

PTL 1 describes a method for treating an acid exhaust gas in which method acid substances such as hydrogen chloride, $SO_x$ and $NO_x$ are simultaneously treated by bringing the acid exhaust gas generated in a combustion facility into contact with a solid acid exhaust gas treatment agent containing a layered double hydroxide.

Citation List

Patent Literature

PTL 1: JP 2016-190199 A

Summary of Invention

Technical Problem

However, the method for treating an acid exhaust gas described in PTL 1 has the following problem: due to the fact that the layered double hydroxide is less likely to take in nitrogen monoxide as compared with hydrogen chloride and $SO_x$, the method cannot exhibit a sufficient treatment performance on nitrogen monoxide accounting for much of $NO_x$ components in the acid exhaust gas.

Then, it is conceivable that, after oxidization of nitrogen monoxide to be converted into nitrogen dioxide by an oxidation catalyst, the exhaust gas may be brought into contact with an acid exhaust gas treatment agent containing the layered double hydroxide as seen in the method for treating an acid exhaust gas described in PTL 1; however, there is such a risk that the oxidation catalyst and components in the acid exhaust gas react to produce reaction products and impair the oxidation catalyst effect of the oxidation catalyst. If the oxidation catalyst effect of the oxidation catalyst is impaired, a problem of deterioration of treatment performance on nitrogen monoxide in the acid exhaust gas may arise.

In consideration of the above problem, the present invention has an object to provide: a method for treating an acid exhaust gas, which method has a high treatment capability on acid gases containing nitrogen oxides in the acid exhaust gas; an equipment for treating an acid exhaust gas; and an incineration facility.

Solution to Problem

As a result of exhaustive studies to solve the above problem, the present inventors have found that the above problem can be solved by removal of $SO_x$ in an acid exhaust gas by a layered double hydroxide, followed by oxidization of nitrogen monoxide to be converted into nitrogen dioxide by a transition metal oxide, leading to completion of the present invention.

That is, the present invention provides the following [1] to [13].

[1] A method for treating an acid exhaust gas generated from an incinerator, including the following first to third steps:

the first step of bringing the acid exhaust gas generated from the incinerator into contact with an anionic layered double hydroxide to remove sulfur oxides in the acid exhaust gas;
the second step of bringing the acid exhaust gas having undergone the first step into contact with a transition metal oxide to convert nitrogen monoxide in the acid exhaust gas into nitrogen dioxide; and
the third step of removing nitrogen oxides in the acid exhaust gas having undergone the second step.

[2] The method for treating an acid exhaust gas according to the above [1], wherein in the third step, nitrogen oxides and hydrogen chloride in the acid exhaust gas having undergone the second step are removed.

[3] The method for treating an acid exhaust gas according to [1] or [2], wherein the anionic layered double hydroxide is a $CO_3$-type Mg-Al layered double hydroxide.

[4] The method for treating an acid exhaust gas according to any one of the above [1] to [3], wherein the transition metal oxide is a γ-type manganese dioxide.

[5] The method for treating an acid exhaust gas according to any one of the above [1] to [4], wherein in the third step, the acid exhaust gas having undergone the second step is brought into contact with an anionic layered double hydroxide to remove nitrogen oxides in the acid exhaust gas.

[6] The method for treating an acid exhaust gas according to any one of the above [1] to [5], wherein in the first step, the acid exhaust gas is selectively introduced to any one path among a plurality of paths each containing an anionic layered double hydroxide, and while the acid exhaust gas is brought into contact with the anionic layered double hydroxide contained in the one path, the anionic layered double hydroxides contained in the other paths among the plurality of paths are regenerated.

[7] The method for treating an acid exhaust gas according to any one of the above [1] to [6], wherein in the third step, the acid exhaust gas is selectively introduced to any one path among a plurality of paths each containing an anionic layered double hydroxide, and while the acid exhaust gas is brought into contact with the anionic layered double hydroxide contained in the one path, the anionic layered double hydroxides contained in the other paths among the plurality of paths are regenerated.

[8] An equipment for treating an acid exhaust gas, including means for carrying out the method for treating an acid exhaust gas according to any one of the above [1] to [7].

[9] The equipment for treating an acid exhaust gas according to the above [8], including:

a first accommodation section that accommodates the anionic layered double hydroxide to be used in the first step;
a second accommodation section that accommodates the transition metal oxide to be used in the second step;
a third accommodation section that accommodates the anionic layered double hydroxide to be used in the third step; and
respective pipes to introduce the acid exhaust gas generated from the incinerator to the first accommodation section, to introduce the gas discharged from the first accommodation section to the second accommodation section, and to introduce the gas discharged from the second accommodation section to the third accommodation section.

[10] The equipment for treating an acid exhaust gas according to the above [9], wherein the first accommodation section includes:

a first container and a second container that each accommodate the anionic layered double hydroxide, and
a first switching valve to selectively introduce the acid exhaust gas generated from the incinerator to the first container or the second container.

[11] The equipment for treating an acid exhaust gas according to the above [9] or [10], further including a first concentration detection device, arranged on the upstream side of the second accommodation section, to continuously detect the concentration of sulfur oxides in the acid exhaust gas discharged from the first accommodation section.

[12] The equipment for treating an acid exhaust gas according to any one of the above [9] to [11], wherein the third accommodation section includes:

a third container and a fourth container that each accommodate the anionic layered double hydroxide, and further,
a second switching valve to selectively introduce the gas discharged from the second accommodation section to the third container or the fourth container.

[13] An incineration facility, including: an incinerator; and the equipment for treating an acid exhaust gas according to any one of the above [8] to [12].

Advantageous Effects of Invention

According to the present invention, there can be provided a method for treating an acid exhaust gas, which method has a high treatment capability on acid gases containing nitrogen oxides in the acid exhaust gas, an equipment for treating the acid exhaust gas, and an incineration facility.

Brief Description of Drawings

[Fig. 1] Fig. 1 is a schematic constitution diagram showing one example of an equipment for treating an acid exhaust gas and an incineration facility according to embodiments of the present invention.
[Fig. 2] Fig. 2 is a block diagram of a control circuit for the equipment for treating an acid exhaust gas.

Description of Embodiments

Hereinafter, there will be described a method for treating an acid exhaust gas, an equipment for treating the acid exhaust gas, and an incineration facility.

[Method for treating an acid exhaust gas]

A method for treating an acid exhaust gas according to an embodiment of the present invention is a method for treating the acid exhaust gas generated from an incinerator, and includes the following first to third steps:

· the first step: the acid exhaust gas generated from the incinerator is brought into contact with an anionic layered double hydroxide to remove sulfur oxides in the acid exhaust gas;
· the second step: the acid exhaust gas having undergone the first step is brought into contact with a transition metal oxide to convert nitrogen monoxide in the acid exhaust gas into nitrogen dioxide; and
· the third step: nitrogen oxides in the acid exhaust gas having undergone the second step are removed.

In the method for treating an acid exhaust gas, first, in the first step, by bringing the acid exhaust gas generated from the incinerator into contact with an anionic layered double hydroxide, sulfur oxides ($SO_x$) among acid gas components in the acid exhaust gas are removed. Then, in the second step, by bringing the acid exhaust gas having undergone the first step into contact with a transition metal oxide, nitrogen monoxide (NO) among acid gas components in the acid exhaust gas is converted into nitrogen dioxide ($NO_2$) by an oxidation catalyst action of the transition metal oxide. Thereafter, in the third step, nitrogen oxides ($NO_x$) are removed from the acid exhaust gas having undergone the second step. For example, in the third step, the acid exhaust gas having undergone the second step is brought into contact with an anionic layered double hydroxide to remove $NO_2$.
The method for treating an acid exhaust gas has a high treatment capability on acid gases containing nitrogen oxides ($NO_x$) in the acid exhaust gas. The reason for this effect being attained is, though not especially limited to, conceivably the following reason.
In the method for treating an acid exhaust gas, $SO_x$ are removed in the first step, and in the second step, the oxidation catalyst action of the transition metal oxide enables to fully oxidize NO accounting for much of $NO_x$ components in the acid exhaust gas and converted into $NO_2$. The $NO_2$ formed is removed by the third step. Thus, $SO_x$ and $NO_x$ are removed highly efficiently. Further, since after $SO_x$ are removed in the first step, the acid exhaust gas is brought into contact with a transition metal oxide in the second step, the poisoning action by reaction of the transition metal oxide with $SO_x$ is suppressed. Hence, the oxidation catalyst action of the transition metal oxide is prevented from being impaired and the oxidation catalyst effect is retained. Additionally, at least part of hydrogen chloride in the acid exhaust gas is removed in the first step and in the case where the third step uses an anionic layered double hydroxide, also in the third step, hydrogen chloride is removed.
Thus, the method for treating an acid exhaust gas can be made to be one in which $SO_x$, $NO_x$ and hydrogen chloride can fully be removed, and moreover, the oxidation catalyst effect of the transition metal oxide can be maintained, and in their turn, which has a high treatment capability on acid gases containing nitrogen oxides in the acid exhaust gas.
Hereinafter, each step will be described in detail.

<First step>

In the first step, by bringing an acid exhaust gas generated from an incinerator into contact with an anionic layered double hydroxide, $SO_x$ in the acid exhaust gas are removed.
The anionic layered double hydroxide has a structure in which a layered hydroxide base layer and a middle layer composed of interlayer anions and interlayer water are alternately stacked, and since the anionic layered double hydroxide exchanges the interlayer anions with $SO_x$ in a form of sulfate ions and takes in the components, $SO_x$ can be removed from the acid exhaust gas. Further, since the anionic layered double hydroxide exchanges the interlayer anion with hydrogen chloride in a form of chloride ions and takes in also the hydrogen chloride, in the first step, at least a part of hydrogen chloride in the acid exhaust gas is removed.

(Anionic layered double hydroxide)

The anionic layered double hydroxide to be used as an acid exhaust gas treatment agent in the first step includes $CO_3$-type Mg-Al layered double hydroxides, $SO_4$-type Mg-Al layered double hydroxides and $NO_3$-type Mg-Al layered double hydroxides. Among these, from the viewpoint of target anions as the acid exhaust gas treatment agent, a $CO_3$-type Mg-Al layered double hydroxide is preferable.

The $CO_3$-type Mg-Al layered double hydroxide is a nanoparticle having a structure in which a hydroxide base layer ($[Mg^{2+}_{1-x}Al^{3+}_x(OH)_2]$) and a middle layer ($[(CO_3^{2-})_{x/2} \cdot yH_2O]$) constituted of interlayer carbonate ions and interlayer water are alternately stacked. The $CO_3$-type Mg-Al layered double hydroxide is a non-stoichiometric compound in which the hydroxide base layer has a positive charge equivalent to x, and the carbonate ions are present as a negative ion having a negative charge compensating for the positive charge, in the middle layer.

The anionic layered double hydroxide represented by the $CO_3$-type Mg-Al layered double hydroxide, while holding the hydroxide base layer, can take in acid gases such as hydrogen chloride, sulfur dioxide ($SO_2$) and $NO_2$ between the layers. Hence, the anionic layered double hydroxide is preferably used for the acid exhaust gas treatment to remove the acid gases. In the anionic layered double hydroxide, however, since the solubility of NO to the interlayer water is low as compared with hydrogen chloride, $SO_2$ and $NO_2$, NO is less likely to be taken in as compared with these acid components.

Then, when the $CO_3$-type Mg-Al layered double hydroxide is used for the acid exhaust gas treatment, there may be concurrently used with layered double hydroxides other than the $CO_3$-type Mg-Al layered double hydroxide, or chemical agents other than the layered double hydroxides, for example, calcium hydroxide (slaked lime), calcium oxide, sodium bicarbonate, sodium carbonate, dolomite hydroxide, soft-burned dolomite, aluminum hydroxide, aluminum oxide, magnesium hydroxide and magnesium oxide. However, from the viewpoint of efficiently regenerating and reutilizing the $CO_3$-type Mg-Al layered double hydroxide, it is preferable that the other layered double hydroxides and the chemical agents are made to be not mixedly present.

As the $CO_3$-type Mg-Al layered double hydroxide, a naturally produced clay mineral also exists as hydrotalcite, but usually, a synthesized powder is used. A synthesis method is not especially limited, and a well-known method (for example, a method described in the above PTL 1) can be used.

A $CO_3$-type Mg-Al layered double hydroxide can be obtained, for example, by dropwise charging an aqueous solution in which magnesium nitrate ($Mg(NO_3)_2$) and aluminum nitrate ($Al(NO_3)_3$) are mixed in Mg/Al = 2/1 (in molar ratio) to a sodium carbonate ($Na_2CO_3$) aqueous solution, with the pH being held at 10.5.

(Regeneration of the anionic layered double hydroxide)

In the $CO_3$-type Mg-Al layered double hydroxide used for the acid exhaust gas treatment, when the acid gases are taken in between the layers, interlayer carbonate ions are exchanged with other anions originated from the acid exhaust gas, such as chloride ions, sulfate ions and nitrate ions. An Mg-Al layered double hydroxide thus anion-exchanged with anions originated from the acid exhaust gas has no capability of further removing the acid exhaust gas. Hence, the Mg-Al layered double hydroxide is regenerated, again by anion-exchange, into the $CO_3$-type Mg-Al layered double hydroxide, which is provided to be reutilized.

In the first step, it is preferable that the acid exhaust gas is selectively introduced to any one path among a plurality of paths each containing the anionic layered double hydroxide, and while the acid exhaust gas is brought into contact with the anionic layered double hydroxide contained in the one path, the anionic layered double hydroxides contained in the other paths among the plurality of paths are regenerated.

The Mg-Al layered double hydroxide, which is a layered double hydroxide used in the acid exhaust gas treatment, anion-exchanged with anions originated from the acid exhaust gas can be regenerated by using an anion compound. The Mg-Al layered double hydroxide can be regenerated, for example, by being brought into contact with carbon dioxide gas or a carbonate salt in a wet atmosphere where moisture is present in a large amount, to be subjected to an ion-exchange reaction. The Mg-Al layered double hydroxide can be regenerated into the $CO_3$-type Mg-Al layered double hydroxide by being subjected to anion-exchange using a mixed gas at 70°C or higher containing water and carbon dioxide having a concentration of 5% by volume or higher. The spent layered double hydroxide may be regenerated thereto by using a carbonate aqueous solution.

The regeneration method using gas contact is efficient as means for regeneration into the $CO_3$-type Mg-Al layered double hydroxide as compared with the method using a carbonate aqueous solution, which is liquid.

<Second step>

In the second step, by bringing the acid exhaust gas having undergone the first step into contact with a transition metal oxide, NO in the acid exhaust gas is oxidized into $NO_2$. Then, the $NO_2$ formed in the second step is removed in the third step described later.

(Transition metal oxide)

The transition metal oxide to be used in the second step acts as an oxidation catalyst on acid gases. Thereby, NO contained in the acid exhaust gas is oxidized and converted into $NO_2$.

The transition metal oxide includes manganese dioxide, iron oxide, vanadium oxide, titanium dioxide and copper oxide. Among these, from the viewpoint of the oxidation catalyst effect, manganese dioxide and vanadium oxide are preferable; from the viewpoint of the cost and the easy availability, manganese dioxide is more preferable; and from the viewpoint of the conversion rate from NO into $NO_2$, a $\gamma$-type manganese dioxide is especially preferable.

The transition metal oxide activates the reaction of NO with $O_2$ and thereby oxidizes and converts NO in the acid exhaust gas into $NO_2$.

The transition metal oxide, as long as not being brought into contact with any substance having a specific poisoning action, such as sulfur oxides, continuously exhibits the acidic catalyst action.

<Third step>

In the third step, $NO_x$ in the acid exhaust gas having undergone the second step are removed.

In the third step, it is preferable that by bringing the acid exhaust gas having undergone the second step into contact with an anionic layered double hydroxide, $NO_x$ in the acid exhaust gas are removed.

As the anionic layered double hydroxide, the same one as used in the first step can be used.

In the third step, by using the anionic layered double hydroxide as an acid exhaust gas treatment agent in the third step, in addition to $NO_x$ in the acid exhaust gas having undergone the second step, hydrogen chloride can also be removed.

In the third step, it is preferable that the acid exhaust gas is selectively introduced to any one path among a plurality of paths each containing the anionic layered double hydroxide, and while the acid exhaust gas is brought into contact with the anionic layered double hydroxide contained in the one path, the anionic layered double hydroxides contained in the other paths among the plurality of paths are regenerated.

By thus making the configuration, the treatment of the acid exhaust gas can continuously be carried out and it can be avoided that gasses insufficiently treated are discharged and the incineration is halted.

A method for regenerating the anionic layered double hydroxide can adopt the same one as described in the first step.

[Equipmet for treating an acid exhaust gas]

An equipment for treating an acid exhaust gas according to an embodiment of the present invention has means for carrying out the above method for treating an acid exhaust gas.

In the equipment for treating an acid exhaust gas, examples of means for carrying out the above-mentioned first step include a unit including a first accommodation section containing a container that accommodates the anionic layered double hydroxide, and a pipe connected to the first accommodation section to introduce the acid exhaust gas generated from the incinerator to the first accommodation section. Hereinafter, the unit is referred to as "first unit" in some cases.

Then, examples of means for carrying out the above-mentioned second step include a unit including a second accommodation section containing a container that accommodates the transition metal oxide, and a pipe connected to the second accommodation section to introduce the gas discharged from the first accommodation section to the second accommodation section. Hereinafter, the unit is referred to as "second unit" in some cases.

Further, examples of means for carrying out the above-mentioned third step include a unit including a third accommodation section containing a container that accommodates the anionic layered double hydroxide, and a pipe connected to the third accommodation section to introduce the gas discharged from the second accommodation section to the third accommodation section. Hereinafter, the unit is referred to as "third unit" in some cases.

The above each pipe constitutes a flue through which the gas to be treated flow. Then, in the following description, in the cases of referring to "upstream", "downstream", "upstream side", "downstream side", "inlet" and "outlet", the cases are based on the flowing direction of the gas to be treated.

In the equipment for treating an acid exhaust gas, the first unit, the second unit and the third unit are installed in the state of being connected in series by in this order. Then, by introducing the acid exhaust gas generated from the incinerator to an inlet of the first unit, the above-mentioned first step, second step and third step are carried out. Thereby, as described above, acid gas components such as $SO_x$, $NO_x$ and hydrogen chloride are fully removed. Then, the gas treated in which the acid gas components have been removed is discharged from an outlet of the third unit.

The first accommodation section may include a first container and a second container each containing the anionic layered double hydroxide, and further a first switching valve to selectively introduce the acid exhaust gas generated from the incinerator to the first container or the second container.

By equipping the first switching valve, in the case where there is lowered the treatment capability of the acid exhaust gas by the anionic layered double hydroxide accommodated in one of the first and second containers, by introducing the gas to the other container of the first and second containers through the first switching valve, and using the anionic layered double hydroxide which is accommodated in the other container and whose treatment capability is not lowered, the treatment of the acid exhaust gas can be continued without lowering the treatment capability.

The equipment for treating an acid exhaust gas may further include a first concentration detection device arranged on the upstream side of the second accommodation section to continuously detect the concentration of $SO_x$ in the acid exhaust gas discharged from the first accommodation section.

By equipping the first concentration detection device, a rise in the concentration of $SO_x$ in the gas to be introduced to the second accommodation section can be grasped before the transition metal oxide in the second accommodation section is poisoned by $SO_x$. Then, as described above, in the case of adopting the constitution in which the plurality of containers via the first switching valve each accommodate the anionic layered double hydroxide, by switching, by the first switching valve, one container whose treatment efficiency of $SO_x$ is lowered to the other container whose treatment efficiency is not lowered, the treatment of the acid exhaust gas can be continued without lowering the treatment capability.

The third accommodation section also may have a constitution in which the third accommodation section includes a third container and a fourth container each containing the anionic layered double hydroxide, and further a second switching valve to selectively introduce the acid exhaust gas discharged from the second accommodation section to the third container or the fourth container.

By equipping the second switching valve, in the case where there is lowered the treatment capability of the acid exhaust gas of one container of the third and fourth containers, by introducing the gas to the other container of the third and fourth containers through the second switching valve, and using the anionic layered double hydroxide which is accommodated in the other container and whose treatment capability of the acid exhaust gas is not lowered, the treatment of the acid exhaust gas can be continued without lowering the treatment capability.

The equipment for treating an acid exhaust gas may further include a second concentration detection device arranged on the upstream side of the third accommodation section to continuously detect the concentration of $NO_x$ in the acid exhaust gas discharged from the second accommodation section. It is preferable that the second concentration detection device is one to continuously detect the concentrations of $NO_x$ and hydrogen chloride in the acid exhaust gas.

By equipping the second concentration detection device, a rise in the concentration of $NO_x$ in the gas can be grasped in the downstream of the second accommodation section; and it can be detected that there are such a possibility that the treatment efficiency of NO in the second unit is lowered due to poisoning of the transition metal oxide in the second accommodation section by $SO_x$, and such a possibility that the treatment capability of $NO_x$ is lowered due to poisoning of the anionic layered double hydroxide in the third accommodation section by $NO_x$. Then, as described above, in the case where the plurality of containers via the first switching valve each accommodate the anionic layered double hydroxide, by switching, by the first switching valve, one container whose treatment efficiency of $SO_x$ is lowered to the other container whose treatment efficiency is not lowered; and in the case where the plurality of containers via the second switching valve each accommodate the anionic layered double hydroxide, by switching, by the second switching valve, one container whose treatment efficiency of $NO_x$ is lowered to the other container whose treatment efficiency is not lowered, the treatment of the acid exhaust gas can be continued without lowering the treatment capability.

[Incineration facility]

An incineration facility according to an embodiment of the present invention includes an incinerator and the above equipment for treating an acid exhaust gas.

The equipment for treating an acid exhaust gas is installed in the downstream of the incinerator, and takes in an acid exhaust gas discharged from the incinerator and carries out the above-mentioned first step to the third step to thereby treat the acid exhaust gas.

[Specific examples of the incineration facility including the equipment for treating an acid exhaust gas]

Hereinafter, specific examples of the incineration facility including the equipment for treating an acid exhaust gas will be described by using the drawings.

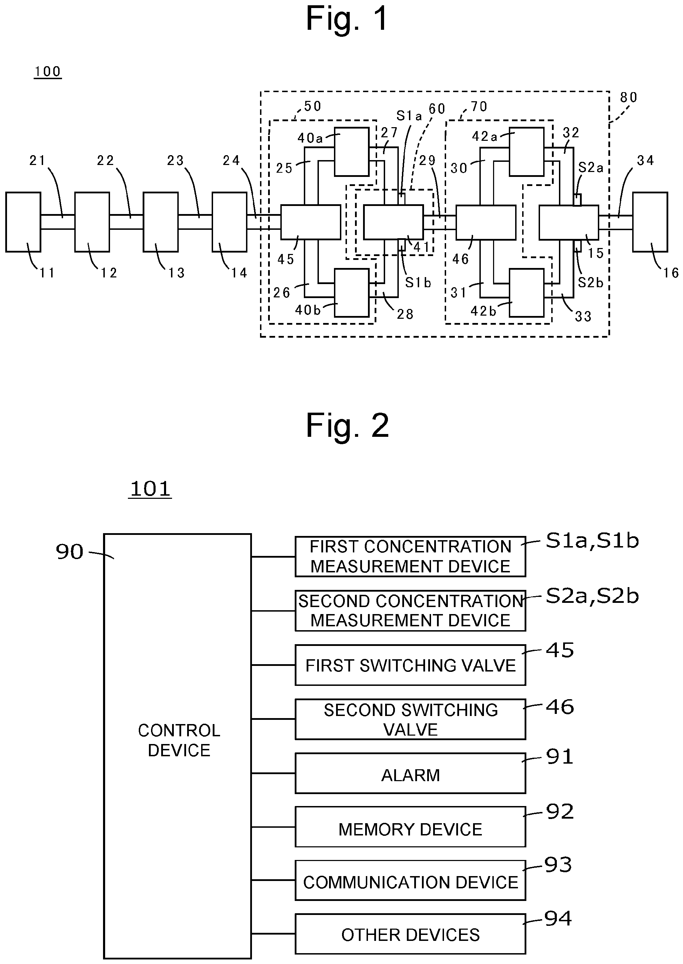

Fig. 1 is a schematic constitution diagram showing one example of the incineration facility including the equipment for treating an acid exhaust gas according to the embodiment of the present invention. The present invention is not limited to the constitution shown in figure.

A combustion facility 100 shown in Fig. 1 has an incinerator 11, a boiler 12, a gas cooling apparatus 13, a dust collector 14, an induced draft fan 15 and a stack 16, and pipes 21 to 34 successively connecting these to form flues.

Then, the combustion facility 100 has an equipment for treating an acid exhaust gas, 80, including a first container 40a and a second container 40b constituting a first accommodation section that accommodates a layered double hydroxide being an acid exhaust gas treatment agent, a container 41 constituting a second accommodation section that accommodates a transition metal oxide being an oxidation catalyst, and a third container 42a and a fourth container 42b constituting a third accommodation section that accommodates a layered double hydroxide being an acid exhaust gas treatment agent.

The upstream sides of the first container 40 and the second container 41 that each accommodate the layered double hydroxide are connected to a first switching valve through pipes 25 and 26, respectively. Further, the upstream sides of the third container 42 and the fourth container 43 that each accommodate the layered double hydroxide are connected to a second switching valve 46 through pipes 30 and 31, respectively.

In the incineration facility 100, a unit 50 is a first unit to carry out the above-mentioned first step, the unit 50 being constituted of the first container 40a and the second container 40b that each accommodate the anionic layered double hydroxide, the pipes 24 to 26 to introduce the acid exhaust gas generated from the incinerator 11 to the first container 40a and the second container 40b, and the first switching valve 45 installed between the pipe 24 and the pipes 25, 26.

Further, a unit 60 is a second unit to carry out the above-mentioned second step, the unit 60 being constituted of the container 41 that accommodates the transition metal oxide, the pipe 29 to introduce the gas discharged from the first unit 50 to the container 41, the pipe 27 to connect the first container 40a and the container 41, and the pipe 28 to connect the second container 40b and the container 41.

Further, a unit 70 is a third unit to carry out the above-mentioned third step, the unit 70 being constituted of the third container 42a and the fourth container 42b that each accommodate the anionic layered double hydroxide, the pipes 29 to 31 to introduce the gas discharged from the second unit 60 to the third container 42a and the fourth container 42b, and the second switching valve 46 installed between the pipe 29 and the pipes 30, 31.

On the upstream side of the second accommodation section, first concentration detection devices to continuously detect the concentration of $SO_x$ in the acid exhaust gas discharged from the first accommodation section are installed.

More Specifically, the first concentration detection devices S1a, S1b are installed at an inlet of the second container 41 on the side of the pipe 27 connected to the first container 40a and at an inlet of the second container 41 on the side of the pipe 28 connected to the second container 40b, respectively.

Further, in the downstream of the third accommodation section, second concentration detection devices to continuously detect the concentration of $NO_x$ and hydrogen chloride in the gas discharged from the third accommodation section are installed.

More Specifically, the second concentration detection devices S2a, S2b are installed at an inlet of the induced draft fan 15 on the side of the pipe 32 connected to the third container 42a and at an inlet of the induced draft fan 15 on the side of the pipe 33 connected to the fourth container 42b, respectively.

The first switching valve 45 and the second switching valve 46 are controlled by a control device not shown in figure, based on outputs from the first concentration detection devices S1a, S1b and the second concentration detection devices S2a, S2b.

Fig. 2 is a block diagram of a control circuit for the equipment for treating an acid exhaust gas, 80.

As shown in Fig. 2, the control circuit 101 contains a control device 90 constituted of CPU and the like and to control the whole, the first concentration measurement devices S1a, S1b, the second concentration measurement devices S2a and S2b, the first switching valve 45, the second switching valve 46, an alarm 91 to issue an alarm to a manager by display, voice and the like, a memory device 92 constituted of ROM, RAM, HDD, SSD and the like to memory various kinds of information necessary for the control, a communication device 93 to send and receive necessary information by being connected to a control room to which the manager belongs, a cloud and the like, and other devices 94. Then, the control circuit 90 may be incorporated in a control circuit for the whole of the incineration facility 100. In this case, the control and communication of other devices not contained in the equipment for treating an acid exhaust gas, 80, come to be also carried out by the control circuit 90.

The control device 90 receives outputs from the first concentration measurement devices S1a, S1b and the second concentration measurement devices S2a, S2b, records the result of the outputs on the memory device 92, and outputs the result outside through the communication device 93. Then, the signal is compared with information memorized in the memory device 92, and based on the comparing result, the first switching valve 45 and the second switching valve 46 are controlled; and the alarm 91 is operated to issue an alarm.

Then, the concentration measurement devices may also be ones which can measure, in addition to concentrations of acid gas components, the flow rates of the gas to be treated.

Then, there will be described the operation of the incineration facility 100 including the equipment for treating an acid exhaust gas, 80.

First, an acid exhaust gas generated in the incinerator 11 is heat recovered by the boiler 12, cooled by the cooling apparatus 13, thereafter, collected by the dust collector 14, and introduced to the first unit 50 of the equipment for treating an acid exhaust gas, 80. At this time, the switching valve 45 selects one of the first container 40 and the second container 41; and the switching valve 46 selects one of the third container 42 and the fourth container 43. Here, in the initial state, any of the anionic layered double hydroxides accommodated in the first to fourth containers is one not having been used for the treatment of the acid exhaust gas or one having been regenerated, and is the one in the state that the treatment capability is not lowered.

Then, the above-mentioned first to third steps are carried out in the first to third units on the acid exhaust gas. Thereby, there are fully removed $SO_x$, $NO_x$ and hydrogen chloride being acid gas components in the acid exhaust gas.

The treatment is finished and the gas from which the acid gas components have been removed is discharged from the third unit 70 and released through the induced draft fan 15 from the stack 16 to the outside.

The control device 90, when outputs from the concentration measurement devices S1a, S1b, S2a, S2b become coincident with predetermined conditions, controls the switching valves 45, 46 and makes them to carry out switching operation.

Specifically, when through the switching valve 45, the acid exhaust gas is introduced to one of the first container 40a and the second container 40b, in the case where it is detected by one of the first concentration measurement devices S1a, S1b that the concentration of $SO_x$ has reached a preset threshold, the switching valve 45 is made to operate to make the acid exhaust gas to be introduced to the other one of the first container 40a and the second container 40b. Further, when through the switching valve 46, the acid exhaust gas is introduced to one of the third container 42a and the fourth container 42b, in the case where it is detected by one of the second concentration measurement devices S2a, S2b that at least one of the concentrations of $NO_x$ and hydrogen chloride has reached a preset threshold, the switching valve 46 is made to operate to make the acid exhaust gas to be introduced to the other one of the third container 42a and the fourth container 42b.

By arranging the switching valves 45, 46, in the case where there is lowered the treatment capability of the acid exhaust gas of one of the first container 40a and the second container 40b, and/or one of the third container 42a and the fourth container 42b, the one container can be switched to the other one whose treatment capability of the acid exhaust gas is not lowered. Hence, it becomes easy to avoid acid gas components in the acid exhaust gas not being fully removed and being discharged from the stack 16 to the outside.

It may be made to be notified of by the alarm 91 in matching with the control of the switching valves 45, 46 that the concentration of $SO_x$ has reached a preset threshold, and the concentration of at least one of $NO_x$ and hydrogen chloride has reached a preset threshold. A manager of the incineration facility can grasp the situation of the acid exhaust gas treatment by the notification by the alarm 91.

The concentration measurement devices may also be ones which can measure, in addition to concentrations of acid gas components, the flow rates of the gas to be treated. Alternatively, in addition to the concentration measurement devices, flow meters to measure the flow rate of the gas to be treated may be installed. Since these constitutions can judge, in addition to the flow rates of the gas, the degrees of rises in the concentrations of acid gas components, the situation of the acid exhaust gas treatment can more accurately be grasped.

The switching valves 45, 46 may be made to be operable by hand. By making the switching valves 45, 46 to be operable by hand, a manager confirms the situation and then can operate the switching valves, based on a notification by the alarm from the control device 90 that the concentration of each acid gas component, based on outputs from each concentration measurement device S1a, S1b, S2a, S2b, has reached a threshold. Alternatively, it may be configured that when a set time is reached, the manager switches the switching valves by hand.

On the other hand, by operating the switching valves 45, 46, the layered double hydroxide contained in one container cut off the flue is regenerated by the above-mentioned regeneration method. The regeneration treatment can be carried out parallel with the treatment of the acid exhaust gas by the layered double hydroxide contained in the other container.

The regeneration treatment may be carried out by taking out the layered double hydroxide from the container, or may be carried out by being brought into contact with a regeneration treatment agent as it is accommodated in the container.

The combustion facility may further be provided with regeneration means to regenerate the layered double hydroxide. In this case, the regeneration means may be located on an in-site connected to the combustion facility 100, or may be arranged on an off-site.

Further, in place of the above-mentioned constitution composed of the switching valve and the plurality of containers, it may be configured that in addition to this constitution, means for supplying a layered double hydroxide not having been used for the treatment or a layered double hydroxide regenerated, and means for taking out the layered double hydroxide having been used for the treatment for a certain time are installed. In this case, it may be configured that each of the means carry out supplying and taking-out of the layered double hydroxide according to the flow rates of the acid exhaust gas and/or the concentrations of the acid gas components.

Examples

Then, the present invention will be described in more detail by way of Examples, but the present invention is not any more limited to these Examples.

The measurement of a physical property value of each Example and Comparative Example was carried out by the following procedure.

<Removal rates of acid gas components>

The removal rates of hydrogen chloride, $SO_2$ and NO in a test gas modeling after an acid exhaust gas were measured by the following procedure.

The gas after passing through a reaction tube was sampled and the concentration of each component of hydrogen chloride, $SO_2$ and NO was measured by an FT-IR gas analyzer. By using these values (A) and the concentration (B) of each component of hydrogen chloride, $SO_2$ and NO in the gas before passing through the reaction tube, the removal rate of each acid gas component was calculated by the following expression.

$$\text{Removal rate [\%] of an acid gas component} = [(B - A)/B] \times 100$$

[Example 1]

0.1 g of a $CO_3$-type Mg-Al layered double hydroxide was packed in a 16 mm-inner diameter glass-made reaction tube A1; 0.1 g of a $\gamma$-type manganese dioxide was packed in a 16 mm-inner diameter glass-made reaction tube A2; 0.3 g of a $CO_3$-type Mg-Al layered double hydroxide was packed in a 16 mm-inner diameter glass-made reaction tube A3; and the reaction tube A1, the reaction tube A2 and the reaction tube A3 were connected in order. A nitrogen gas was allowed to flow from the upstream of the reaction tube A1 and the temperature of the gas flowing through each reaction tube was regulated so as to be 170°C, in a tubular electric furnace.

The flow rate of each gas was regulated by a mass flow controller while allowing nitrogen gas to flow so as to achieve a concentration of hydrogen chloride of 300 ppm, a concentration of $SO_2$ of 50 ppm and a concentration of NO of 150 ppm, and the nitrogen gas was allowed to flow through the reaction tubes so that the superficial velocity in the reaction tubes was 1.0 m/min. The nitrogen gas containing hydrogen chloride, $SO_2$ and NO in the specific concentrations was thus configured to be treated in the order of the first step → the second step → the third step.

60 min after the start of the test, the concentrations of hydrogen chloride, $SO_2$ and NO in the flowing gas at the outlet of the reaction tube A3 were measured and the removal rates were calculated. The results are shown in Table 1. Here, the $NO_x$ concentration is the sum concentration of nitrogen oxides such as NO, $NO_2$ and the like. Then, Table 1 further describes the concentrations of NO and $NO_2$ at the outlets of each reaction tube corresponding to each step, and also the concentration of $NO_x$ being the sum of NO and $NO_2$. The same description applies to each Comparative Example described hereinafter.

[Comparative Example 1]

0.3 g of a $CO_3$-type Mg-Al layered double hydroxide was packed in a 16 mm-inner diameter glass-made reaction tube B1; and a nitrogen gas was allowed to flow through the reaction tube 1 from the upstream thereof, and the temperature of the gas flowing through the reaction tube was regulated so as to be 170°C, in a tubular electric furnace.

The flow rate of each gas was regulated by a mass flow controller while allowing nitrogen gas to flow so as to achieve a concentration of hydrogen chloride of 300 ppm, a concentration of $SO_2$ of 50 ppm and a concentration of NO of 150 ppm, and the nitrogen gas was allowed to flow through the reaction tube so that the superficial velocity in the reaction tube was 1.0 m/min. The nitrogen gas containing hydrogen chloride, $SO_2$ and NO in the specific concentrations was thus configured to be treated only by the first step.

60 min after the start of the test, the concentrations of hydrogen chloride, $SO_2$ and NO in the flowing gas at the outlet of the reaction tube B1 were measured and the removal rates were calculated. The results are shown in Table 1.

[Comparative Example 2]

0.1 g of a $\gamma$-type manganese dioxide was packed in a 16 mm-inner diameter glass-made reaction tube C1; and 0.3 g of a $CO_3$-type Mg-Al layered double hydroxide was packed in a 16 mm-inner diameter glass-made reaction tube C2 as a later stage; and the reaction tube C1 and the reaction tube C2 were connected in order. A nitrogen gas was allowed to flow from the upstream of the reaction tube C1 and the temperature of the gas flowing through each reaction tube was regulated so as to be 170°C, in a tubular electric furnace.

The flow rate of each gas was regulated while allowing nitrogen gas to flow so as to achieve a concentration of hydrogen chloride of 300 ppm, a concentration of $SO_2$ of 50 ppm and a concentration of NO of 150 ppm, and the nitrogen gas was allowed to flow through the reaction tubes so that the superficial velocity in the reaction tubes was 1.0 m/min. The nitrogen gas containing hydrogen chloride, $SO_2$ and NO in the specific concentrations was thus configured to be treated in the order of the second step → the third step.

60 min after the start of the test, the concentrations of hydrogen chloride, $SO_2$ and NO in the flowing gas at the outlet of the reaction tube C2 were measured and the removal rates were calculated. The results are shown in Table 1.

[Comparative Example 3]

A nitrogen gas containing hydrogen chloride, $SO_2$ and NO in the specific concentrations was configured to be treated in the order of the first step → the second step, as in Example 1, except for installing no reaction tube A3.

60 min after the start of the test, the concentrations of hydrogen chloride, $SO_2$ and NO in the flowing gas at the outlet of the reaction tube A2 were measured and the removal rates were calculated. The results are shown in Table 1.

Table 1

| | Kind of Gas | Example 1 | Comparative Example 1 | Comparative Example 2 | Comparative Example 3 |
|---|---|---|---|---|---|
| Order of Steps | - | 1 -->2-->3 | 1 | 2→3 | 1→2 |
| Removal Rate [%] | hydrogen chloride | 100 | 100 | 100 | 100 |
| | $SO_2$ | 100 | 100 | 100 | 100 |
| | $NO_x$ | 90 | 0 | 60 | 10 |
| Concentration at Outlet of 1 ppm | $NO_x$ | 150 | 150 | - | 150 |
| | NO | 150 | 150 | - | 150 |
| | $NO_2$ | 0 | 0 | - | 0 |
| Concentration at Outlet of 2 | $NO_x$ | 135 | - | 135 | 135 |
| | NO | 15 | - | 60 | 15 |
| | $NO_2$ | 120 | - | 75 | 120 |
| Concentration at Outlet of 3 | $NO_x$ | 15 | - | 60 | - |
| | NO | 15 | - | 60 | - |
| | $NO_2$ | 0 | - | 0 | - |

As is clear from Table 1, in Example 1, it is seen that high removal rates could be attained for all the components of hydrogen chloride, $SO_2$ and NO.

**[0106]** By contrast, in Comparative Example 1, it is seen that although the removal rates of hydrogen chloride and $SO_2$ were high, NO could not be removed at all. In Comparative Example 2, although the removal rates of hydrogen chloride and $SO_2$ were high and NO was removed in a certain amount, the removal rate of NO is lower than in Example 1, so it is understandable that the oxidation catalyst effect of the transition metal oxide deteriorated by a reaction with $SO_2$. Further in Comparative Example 3, it is seen that although the removal rates of hydrogen chloride and $SO_2$ were high, since the third step was not present, which was different from Example 1, $NO_2$ into which NO had been converted in the second step could not be removed.

Reference Signs List

11: INCINERATOR
12: BOILER
13: GAS COOLING APPARATUS
14: DUST COLLECTOR
15: INDUCED DRAFT FAN
16: STACK
21 to 34: PIPE (FLUE)
40: FIRST ACCOMMODATION SECTION
40a: FIRST CONTAINER
40b: SECOND CONTAINER
41: SECOND ACCOMMODATION SECTION
42: THIRD ACCOMMODATION SECTION
42a: THIRD CONTAINER
42b: FOURTH CONTAINER
45: FIRST SWITCHING VALVE
46: SECOND SWITCHING VALVE
50: FIRST UNIT
60: SECOND UNIT
70: THIRD UNIT
80: EQUIPMENT FOR TREATING ACID EXHAUST GAS
90: CONTROL DEVICE
91: ALARM
92: MEMORY DEVICE
93: COMMUNICATION DEVICE
94: OTHER DEVICES
100: INCINERATION FACILITY

**Claims**

1. A method for treating an acid exhaust gas generated from an incinerator, comprising the following first to third steps:

   the first step of bringing the acid exhaust gas generated from the incinerator into contact with an anionic layered double hydroxide to remove sulfur oxides in the acid exhaust gas;
   the second step of bringing the acid exhaust gas having undergone the first step into contact with a transition metal oxide to convert nitrogen monoxide in the acid exhaust gas into nitrogen dioxide; and
   the third step of removing nitrogen oxides in the acid exhaust gas having undergone the second step.

2. The method for treating an acid exhaust gas according to claim 1, wherein in the third step, nitrogen oxides and hydrogen chloride in the acid exhaust gas having undergone the second step are removed.

3. The method for treating an acid exhaust gas according to claim 1 or 2, wherein the anionic layered double hydroxide is a $CO_3$-type Mg-Al layered double hydroxide.

4. The method for treating an acid exhaust gas according to any one of claims 1 to 3, wherein the transition metal oxide is a $\gamma$-type manganese dioxide.

5. The method for treating an acid exhaust gas according to any one of claims 1 to 4, wherein in the third step, the acid exhaust gas having undergone the second step is brought into contact with an anionic layered double hydroxide to remove nitrogen oxides in the acid exhaust gas.

6. The method for treating an acid exhaust gas according to any one of claims 1 to 5, wherein in the first step, the acid exhaust gas is selectively introduced to any one path among a plurality of paths each containing an anionic layered double hydroxide, and while the acid exhaust gas is brought into contact with the anionic layered double hydroxide contained in the one path, the anionic layered double hydroxides contained in the other paths among the plurality of paths are regenerated.

7. The method for treating an acid exhaust gas according to any one of claims 1 to 6, wherein in the third step, the acid exhaust gas is selectively introduced to any one path among a plurality of paths each containing an anionic layered double hydroxide, and while the acid exhaust gas is brought into contact with the anionic layered double hydroxide contained in the one path, the anionic layered double hydroxides contained in the other paths among the plurality of paths are regenerated.

8. An equipment for treating an acid exhaust gas, comprising means for carrying out the method for treating an acid exhaust gas according to any one of claims 1 to 7.

9. The equipment for treating an acid exhaust gas according to claim 8, comprising:

    a first accommodation section that accommodates the anionic layered double hydroxide to be used in the first step;
    a second accommodation section that accommodates the transition metal oxide to be used in the second step;
    a third accommodation section that accommodates the anionic layered double hydroxide to be used in the third step; and
    respective pipes to introduce the acid exhaust gas generated from the incinerator to the first accommodation section, to introduce the gas discharged from the first accommodation section to the second accommodation section, and to introduce the gas discharged from the second accommodation section to the third accommodation section.

10. The equipment for treating an acid exhaust gas according to claim 9, wherein the first accommodation section comprises:

    a first container and a second container that each accommodate the anionic layered double hydroxide, and further,
    a first switching valve to selectively introduce the acid exhaust gas generated from the incinerator to the first container or the second container.

11. The equipment for treating an acid exhaust gas according to claim 9 or 10, further comprising a first concentration detection device, arranged on the upstream side of the second accommodation section, to continuously detect a concentration of sulfur oxides in the acid exhaust gas discharged from the first accommodation section.

12. The equipment for treating an acid exhaust gas according to any one of claims 9 to 11, wherein the third accommodation section comprises:

    a third container and a fourth container that each accommodate the anionic layered double hydroxide, and
    a second switching valve to selectively introduce the gas discharged from the second accommodation section to the third container or the fourth container.

13. An incineration facility, comprising: an incinerator; and the equipment for treating an acid exhaust gas according to any one of claims 8 to 12.

# Fig. 1

100

# Fig. 2

101

| 90 | CONTROL DEVICE |
|---|---|

FIRST CONCENTRATION MEASUREMENT DEVICE — S1a,S1b

SECOND CONCENTRATION MEASUREMENT DEVICE — S2a,S2b

FIRST SWITCHING VALVE — 45

SECOND SWITCHING VALVE — 46

ALARM — 91

MEMORY DEVICE — 92

COMMUNICATION DEVICE — 93

OTHER DEVICES — 94

## INTERNATIONAL SEARCH REPORT

| | International application No. |
|---|---|
| | PCT/JP2021/011044 |

**A. CLASSIFICATION OF SUBJECT MATTER**

Int.Cl. C01F7/00(2006.01)i, B01D53/50(2006.01)i, B01D53/56(2006.01)i,
B01D53/68(2006.01)i, B01D53/75(2006.01)i, B01D53/82(2006.01)i,
B01D53/86(2006.01)i, B01D53/96(2006.01)i, B01J20/08(2006.01)i,
B01J20/34(2006.01)i, B01J23/34(2006.01)i, F23J15/00(2006.01)i
FI: B01D53/50100, B01D53/96, B01D53/75, B01D53/82, B01D53/86222,
B01J20/08C, B01J20/34F, B01D53/68100, F23J15/00A, F23J15/00Z, F23J15/00B,
C01F7/00C, B01J23/34A, B01D53/56ZAB

According to International Patent Classification (IPC) or to both national classification and IPC

**B. FIELDS SEARCHED**

Minimum documentation searched (classification system followed by classification symbols)

Int.Cl. C01F7/00, B01D53/02-53/12, B01D53/34-53/96, B01J20/00-38/74,
F23J13/00-99/00

Documentation searched other than minimum documentation to the extent that such documents are included in the fields searched

| | |
|---|---|
| Published examined utility model applications of Japan | 1922-1996 |
| Published unexamined utility model applications of Japan | 1971-2021 |
| Registered utility model specifications of Japan | 1996-2021 |
| Published registered utility model applications of Japan | 1994-2021 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 2003-053132 A (MITSUBISHI HEAVY INDUSTRIES, LTD.) 25 February 2003 (2003-02-25), paragraphs [0042], [0047]-[0059], fig. 1 | 1-13 |
| Y | US 5358701 A (BOARD OF TRUSTEES OPERATING MICHIGAN STATE UNIVERSITY) 25 October 1994 (1994-10-25), claims, column 5, line 26 to column 9, line 40, examples | 1-13 |
| Y | JP 8-173796 A (SAKAI CHEMICAL IND CO., LTD.) 09 July 1996 (1996-07-09), claims | 4 |
| Y | JP 2006-289248 A (TOYOTA CENTRAL R&D LABS., INC.) 26 October 2006 (2006-10-26), paragraph [0021] | 4 |
| A | JP 2016-190199 A (KURITA WATER INDUSTRIES LTD.) 10 November 2016 (2016-11-10) | 1-13 |

☒ Further documents are listed in the continuation of Box C. ☒ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 22 April 2021 | 11 May 2021 |

| Name and mailing address of the ISA/ | Authorized officer |
|---|---|
| Japan Patent Office 3-4-3, Kasumigaseki, Chiyoda-ku, Tokyo 100-8915, Japan | |
| | Telephone No. |

Form PCT/ISA/210 (second sheet) (January 2015)

**INTERNATIONAL SEARCH REPORT**

| International application No. |
| --- |
| PCT/JP2021/011044 |

C (Continuation).   DOCUMENTS CONSIDERED TO BE RELEVANT

| Category* | Citation of document, with indication, where appropriate, of the relevant passages | Relevant to claim No. |
| --- | --- | --- |
| A | JP 50-083263 A (NIPPON SANGYO GIJUTSU KK) 05 July 1975 (1975-07-05) | 1-13 |

Form PCT/ISA/210 (second sheet) (January 2015)

**INTERNATIONAL SEARCH REPORT**
Information on patent family members

| International application No. |
| --- |
| PCT/JP2021/011044 |

```
JP 2003-053132 A    25 February 2003    (Family: none)

US 5358701 A        25 October 1994     (Family: none)

JP 8-173796 A       09 July 1996        (Family: none)

JP 2006-289248 A    26 October 2006     (Family: none)

JP 2016-190199 A    10 November 2016    (Family: none)

JP 50-083263 A      05 July 1975        (Family: none)
```

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2016190199 A